# EUROPÄISCHE PATENTANMELDUNG

(11) **EP 3 943 372 A1**
(43) Veröffentlichungstag der Anmeldung: **26.01.2022**
(21) Anmeldenummer: 20000364.8
(22) Anmeldetag: 07.10.2020
(51) Int. Cl.: B62J 7/08, B62J 9/27

(54) **HAKEN FÜR FALT- UND ROLLBARES FAHRRADZUBEHÖR UND FAHRRADTASCHEN ZUR BEFESTIGUNG DIESER AN ZWEIRÄDERN**

(30) Priorität: 20.07.2020 DE 202020003112 U
(71) Anmelder: de-Quadros, Heike, 23966 Wismar (DE)
(72) Erfinder: de-Quadros, Heike, 23966 Wismar (DE)
(74) Vertreter: ETL IP Patent- und Rechtsanwaltsgesellschaft mbH

(57) **Zusammenfassung**

Die Erfindung betrifft einen Haken (1) für falt- und rollbares Fahrradzubehör und Fahrradtaschen zur Befestigung dieser an Zweirädern. Der Haken (1) besteht aus einer Vorder- (2) und einer Rückseite (3),sowie einem Hakenkopf (4), zwei Hakenschenkeln (6) und (7) sowie einer Hakenplatte (5), wobei der Hakenkopf (4) über den Hakenschenkel (6) eine fest verbundene Einheit mit der Hakenplatte (5) bildet und ein Grifffortsatz (10) den Hakenschenkels (7) verlängert und sich nach der Aufnahmeöffnung (9) nach außen, weg von dem Hakenschenkel (6) und der Hakenplatte (5) biegt.

## Beschreibung

Zum Transport von verschiedenen Gütern an Zweirädern, wie zum Beispiel Fahrrad, Pedelec oder E-Bike, ist es üblich diese mit einem Gepäckträger auszustatten, welcher festes oder abnehmbares Fahrradzubehör oder Fahrradtaschen aufnehmen kann. Zur sicheren Befestigung dieses Fahrradzubehörs oder Fahrradtaschen, sind diese meist mit einem oder mehreren Haken ausgerüstet. Diese Haken sollen einen sicheren Halt am Gepäckträger garantieren und so eine sichere Fahrt des Zweiradnutzers ermöglichen.
Üblicherweise sind die Haken fest, also unlösbar über eine Schiene oder auch als Einzelhaken mittels einer Gegenplatte mit dem Zubehör oder der Tasche verschraubt, vernietet, verschweißt oder verklebt. Diese Art der Befestigung erhöht wesentlich das Gewicht der Tasche und ermöglicht das Entfernen der Haken vom Fahrradzubehör oder der Fahrradtasche nur durch Beschädigung derselben. Üblicherweise ist mit den bekannten Befestigungskonstruktionen, ein Falten und meist auch ein Einrollen, wie nach der DE 10 2017 009 369 A1 bekannt ist, nicht möglich.

Aus der DE 43 29 017 C2 ist ein Haken mit Riegel bekannt, an dessen Befestigungsschenkel Nietlöcher eingelassen, sind um den Haken frei am Packstück zu befestigen.
Nachteilig an dieser Konstruktion ist, dass sie vernietet wird und somit nicht vom Zubehör oder der Fahrradtasche entfernt werden kann. Außerdem ist dieser Haken an ultraleichten Fahrradtaschen nicht oder nur schwer einsetzbar. Das Verbleiben am Zubehör oder der Fahrradtasche verhindert oder erschwert außerdem das Falten und Zusammenrollen derselben.

Aus der DE 17 04 609 U ist ein Anhängehaken mit einer mit einem Verschlussstück versehenen Ringöse mit Befestigungsflansch bekannt, an dem Nietlöcher eingelassen sind, um den Haken an Aktenmappen oder Einkaufstaschen zu befestigen.
Nachteilig an dieser Konstruktion ist, dass sie an der Tasche vernietet wird und somit nicht von Aktenmappen oder Einkaufstaschen entfernt werden kann. Außerdem ist dieser Haken an ultraleichten Fahrradtaschen nicht oder nur schwer einsetzbar. Das Verbleiben an den Taschen verhindert oder erschwert außerdem das Falten und Zusammenrollen derselben.

Aus der EP 2 991 892 B1 ist eine Taschenanbringungsschiene für Fahrradtaschen bekannt, deren Haken fester Teil der Taschenanbringungsschiene sind. Die Taschenanbringungsschiene erstreckt sich zwischen dem ersten und zweiten Endabschnitt der Tasche. Zur Befestigung an der Tasche wird die Taschenanbringungsschiene in ein Fach eingebracht, welches aus dem gleichen Material wie das Vordermaterial der Tasche und vorzugsweise am oberen Ende der Tasche angeordnet ist.
Nachteilig an dieser Taschenanbringungsschiene ist, dass sie sich zwischen dem ersten und zweiten Endabschnitt erstreckt, einteilig ist und dadurch das Zusammenrollen und Falten der Tasche in Richtung der Taschenanbringungsschiene ermöglicht. Das Falten der Tasche über die Längsseite der Taschenanbringungsschiene ist jedoch nicht ermöglicht. Durch das Verschweißen des Einbringungsfaches ist die Taschenanbringungsschiene unlösbar mit der Tasche verbunden und kann nur durch die Beschädigung der Tasche entfernt werden.

Aus der US 5 435 471 A ist ein Befestigungssystem für Fahrradtaschen bekannt, welches sich mittels einer Schiene zwischen den ersten und zweiten seitlichen Begrenzungen der Tasche erstreckt. Die Haken sind bei diesem Befestigungssystem an der Schiene befestigt. Diese Schiene ist mit der Tasche verschraubt oder vernietet.
Nachteilig an diesem Hakensystem ist, dass es mit der Tasche vernietet oder verschraubt wird und somit nur schwer oder gar nicht vom Zubehör oder der Fahrradtasche entfernt werden kann. Außerdem ist dieser Haken an ultraleichten Fahrradtaschen nicht oder nur schwer einsetzbar. Das Verbleiben am Zubehör oder an der Fahrradtasche verhindert oder erschwert außerdem das Falten und Einrollen von ultraleichten Fahrradtaschen.

Aus der EP 2 611 677 B1 ist ein Befestigungssystem für Fahrradtaschen bekannt, welches sich über eine Schiene zwischen den ersten und zweiten seitlichen Begrenzungen der Tasche erstreckt. Die Haken sind mit dieser Schiene fest verbunden. Diese Schiene wird mit der Tasche verschraubt oder vernietet. Nachteilig dieses Hakensystems ist ebenfalls, dass es mit der Tasche vernietet oder verschraubt wird und somit nur schwer oder gar nicht vom Zubehör oder der Fahrradtasche entfernt werden kann. Außerdem ist dieser Haken an ultraleichten Fahrradtaschen nicht oder nur schwer einsetzbar. Das Verbleiben am Zubehör oder der Fahrradtasche verhindert oder erschwert außerdem das Falten und Einrollen von ultraleichten Fahrradtaschen.

Aus der DE 90 02 052 U1 ist ein Befestigungssystem bekannt, welches aus einer Tragplatte oder einer verstärkten Rückwand besteht und zwei Haken aufweist. Die Haken sind fest mit der Tragplatte verschraubt oder vernietet.
Nachteilig an diesem Hakensystem ist, dass es fest mit der Tasche vernietet oder verschraubt wird und somit nur schwer oder gar nicht vorn Zubehör oder der Fahrradtasche entfernt werden kann. Die Haken sowie die Tragplatte verhindern oder erschweren außerdem das Falten und Einrollen derselben.

Die Aufgabe der Erfindung besteht darin, einen leichten, bei Nichtgebrauch vom Fahrradzubehör oder der Fahrradtasche einfach zu entnehmenden sowie das Falten und Zusammenrollen der selbigen ermöglichenden Gepäckträgerhaken zu schaffen. Dieser Haken soll außerdem ein einfaches und schnelles Anbringen und Entnehmen des Fahrradzubehörs oder der Fahrradtasche am Gepäckträger ermöglichen, sowie die Fahrsicherheit gewährleisten.

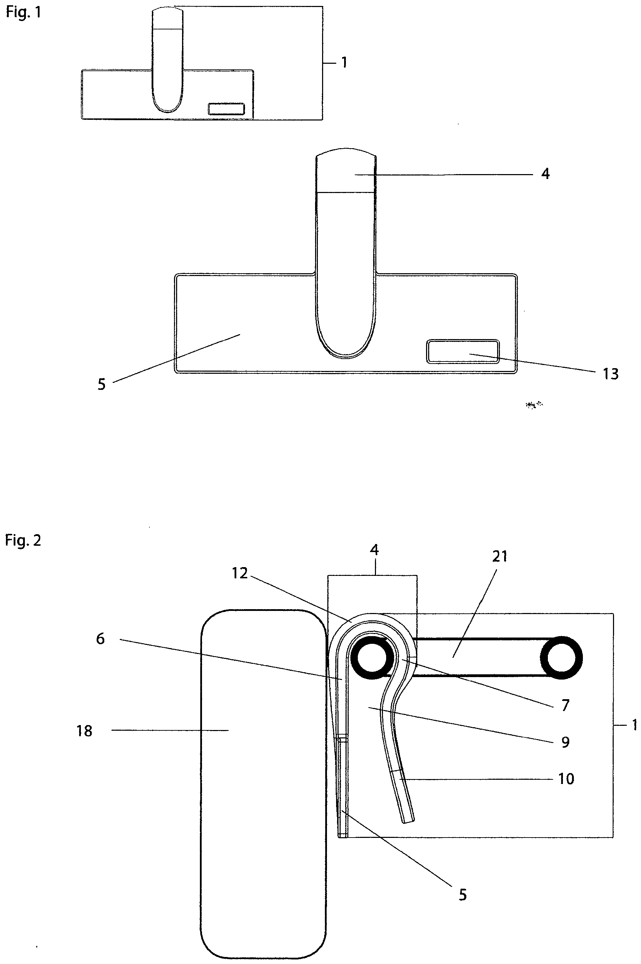

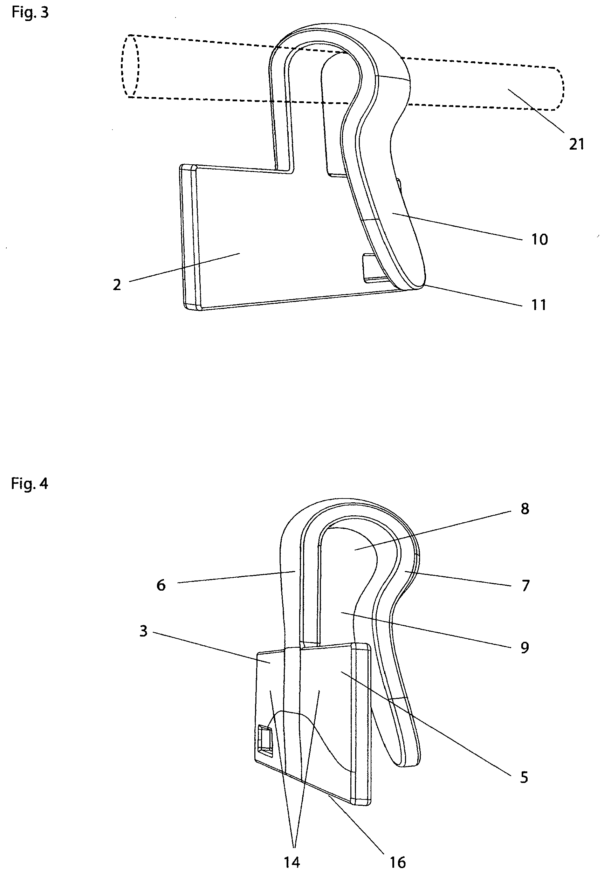

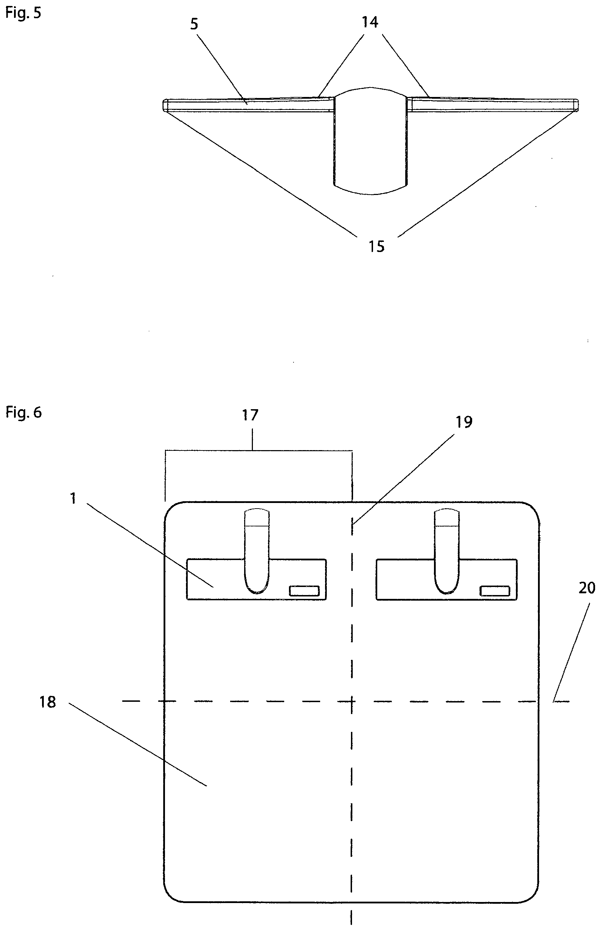

Die Aufgabe der Erfindung wird durch einen Haken 1 für falt- und rollbares Fahrradzubehör und Fahrradtaschen zur Befestigung dieser an Zweirädern, wie am Fahrrad, Pedelec oder E-Bike gelöst, der aus einer Vorder- 2 und einer Rückseite 3, sowie einem Hakenkopf 4, zwei Hakenschenkeln 6 und 7 sowie einer Hakenplatte 5 besteht, wobei der Hakenkopf 4 über den Hakenschenkel 6 eine fest verbundene Einheit mit der Hakenplatte 5 bildet und ein Grifffortsatz 10 den Hakenschenkel 7 verlängert,. der sich nach der Aufnahmeöffnung 9 nach außen, weg von dem Hakenschenkel 6 und der Hakenplatte 5 biegt.
Der Grifffortsatz (10) kann mit einer Rundung 11 abschließen.
Die Hakenplatte (5) ist kleiner als die halbe Breite 17 der dem Fahrrad zugewandten Seite des Fahrradzubehörs oder der Fahrradtasche 18.
Der Haken 1 ist nicht fest mit dem Fahrradzubehör oder der Fahrradtasche 18 verbunden.
Der Hakenkopf 4 sowie die Hakenschenkel 6 und 7 können durch eine Wölbung 12 verstärkt sein.
Die Hakenplatte 5 kann durch eine Wölbung 14 verstärkt sein und sich zu den Enden beidseitig 15 und zur Unterkante 16 hin verjüngen, wobei die Hakenplatte 5 mit einem Durchbruch 13 versehen sein kann.
Die Erfindung wird nun anhand eines Beispiels näher erläutert, wobei Fig. 1 eine Frontalansicht des Hakens, Fig. 2 eine Seitenansicht des Hakens, Fig. 3 und Fig. 4 eine perspektivische Ansicht des Hakens, Fig.5 eine Aufsicht des Hakens sowie
Fig.6 eine bevorzugte Anordnung des Hakens am Fahrradzubehör oder der Fahrradtasche zeigen und wobei
- 1: Haken
- 2: Vorderseite
- 3: Rückseite
- 4: Hakenkopf
- 5: Hakenplatte
- 6: Hakenschenkel hinten
- 7: Hakenschenkel vorn
- 8: kreisförmiger Hohlraum
- 9: Aufnahmeöffnung
- 10: Grifffortsatz
- 11: Grifffortsatzrundung
- 12: Hakenkopf Wölbung
- 13: Hakenplattendurchbruch
- 14: Hakenplattenwölbung
- 15: Hakenplattenseiten
- 16: Hakenplattenunterkante
- 17: Seitlicher Endabschnitt Tasche (18)
- 18: Fahrradzubehörs oder Fahrradtasche
- 19: Y-Achse
- 20: X-Achse
- 21: Gepäckträgerstrebe
bedeuten.

### Beispiel:

Der Haken 1)der Erfindung besteht aus einer Vorder- 2 und einer Rückseite 3, sowie einem Hakenkopf 4 und einer Hakenplatte 5, wobei der Hakenkopf 4 über den Hakenschenkel 6 eine fest verbundene Einheit mit der Hakenplatte 5 bildet. Die Hakenplatte 5 kann mit einem Durchbruch 13 versehen sein.
Zwischen den beiden Hakenschenkeln 6 und 7 wird ein kreisförmiger Hohlraum 8 gebildet, welcher für die Aufnahme der Gepäckträgerstrebe 21 vorgesehen ist. Der Hakenschenkel 7 ist federnd und offen und nach dem Hakenhohlraum 8 in Richtung Hakenschenkel 6 gebogen, wodurch eine sich verjüngende Aufnahmeöffnung 9 gebildet wird. Ein Grifffortsatz 10 des Hakenschenkels 7 ist verlängert und biegt sich nach der Aufnahmeöffnung 9 nach außen, weg von dem Hakenschenkel 6 und der Hakenplatte 5. Der Grifffortsatz 10 kann mit einer Rundung 11 abschließen.
Der Hakenkopf 4 sowie die Hakenschenkel 6 und 7 können durch eine Wölbung 12 verstärkt werden.
Die Hakenplatte 5 kann an der Rückseite 3 durch eine Wölbung 14 verstärkt werden und sich beidseitig 15 und zur Unterkante hin (16) verjüngen.
Der Haken 1)erstreckt sich zwischen dem ersten seitlichen Endabschnitt 17 des Fahrradzubehörs oder der Fahrradtasche 18 bis maximal der Mitte beziehungsweise Y- Achse 19 um ein Falten und /oder Rollen um diese Achse 19 und /oder die X-Achse 20 des Fahrradzubehörs oder der Fahrradtasche 18 zu ermöglichen.
Der Haken 1 wird durch Einklicken des Hakenkopf 4 in die Gepäckträgerstrebe 21 am Gepäckträger befestigt, dabei zeigt der Hakenschenkel 6 mit der Hakenplatte 5 nach Außen in Richtung Rückseite des Fahrradzubehörs oder der Fahrradtasche 18 und der Hakenschenkel 7 mit dem federnden Grifffortsatz 10 nach Innen in Richtung Zweirad. Die Aufnahmeöffnung 9 sichert den Haken 1 am Gepäckträger.

## Patentansprüche

1. Haken (1) für falt- und rollbares Fahrradzubehör und Fahrradtaschen zur Befestigung dieser an Zweirädern, **dadurch gekennzeichnet, dass** der Haken (1) aus einer Vorder- (2) und einer Rückseite (3), sowie einem Hakenkopf (4), zwei Hakenschenkeln (6) und (7) sowie einer Hakenplatte (5) besteht, wobei der Hakenkopf (4) über den Hakenschenkel (6) eine fest verbundene Einheit mit der Hakenplatte (5) bildet und ein Grifffortsatz (10) den Hakenschenkel (7) verlängert und sich nach der Aufnahmeöffnung (9) nach außen, weg von dem Hakenschenkel (6) und der Hakenplatte (5) biegt.

2. Haken (1), nach Anspruch 1, **dadurch gekennzeichnet, dass** der Grifffortsatz (10) mit einer Rundung (11) abschließen kann.

3. Haken (1) nach Anspruch 1, **dadurch gekennzeichnet, dass** die Hakenplatte (5) kleiner als die halbe Breite (17) der dem Fahrrad zugewandten Seite des Fahrradzubehörs oder der Fahrradtasche (18) ist.

4. Haken (1) nach Anspruch 1 **dadurch gekennzeichnet, dass** der Haken (1) nicht fest mit dem Fahrradzubehör oder der Fahrradtasche (18) verbunden ist.

5. Haken (1) nach Anspruch 1, **dadurch gekennzeichnet, dass** der Hakenkopf (4) sowie die Hakenschenkel (6) und (7) durch eine Wölbung (12) verstärkt sein können.

6. Haken (1) nach Anspruch 1 **dadurch gekennzeichnet, dass** die Hakenplatte (5) durch eine Wölbung (14) verstärkt sein und sich zu den Enden beidseitig (15) und zur Unterkante (16) hin verjüngen kann.

7. Haken (1) nach Anspruch 1, **dadurch gekennzeichnet, dass** die Hakenplatte (5) mit einem Durchbruch (13) versehen sein kann.
